# EUROPÄISCHE PATENTSCHRIFT

(11) **EP 1 730 825 B1**
(45) Veröffentlichungstag und Bekanntmachung des Hinweises auf die Patenterteilung: **28.03.2012**
(21) Anmeldenummer: 04803670.1
(22) Anmeldetag: 09.12.2004
(51) Int. Cl.: H02G 1/08, B60J 3/02, H01R 4/24

(54) **VORRICHTUNG ZUM VERLEGEN MINDESTENS EINES KABELS IN EINER KOMPONENTE EINES FAHRZEUGS, SONNENBLENDE MIT EINER VORRICHTUNG ZUM VERLEGEN UND VERFAHREN ZUM VERLEGEN EINES KABELS**
DEVICE FOR MOVING AT LEAST ONE CABLE IN A COMPONENT OF A VEHICLE, A SUNVISOR PROVIDED WITH A MOVING DEVICE AND METHOD FOR MOVING A CABLE
DISPOSITIF POUR POSER AU MOINS UN CABLE DANS UNE COMPOSANTE D'UN VEHICLE, PARE-SOLEIL COMPORTANT UN TEL DISPOSITIF, ET PROCEDE POUR POSER UN CABLE

(30) Priorität: 05.01.2004 DE 102004001186
(43) Veröffentlichungstag der Anmeldung: 13.12.2006
(73) Patentinhaber: Johnson Controls Interiors GmbH & Co. KG, 47929 Grefrath (DE)
(72) Erfinder: WELTER, Patrick, F-57730 Lachambre (FR)
(74) Vertreter: Hemmelmann, Klaus
(86) Internationale Anmeldenummer: PCT/EP2004/014012
(87) Internationale Veröffentlichungsnummer: WO 2005/067115

(56) Entgegenhaltungen:
- DE-U1- 9 306 219
- PATENT ABSTRACTS OF JAPAN Bd. 2003, Nr. 10, 8. Oktober 2003 (2003-10-08) -& JP 2003 164033 A (YAZAKI CORP; MITSUBISHI MOTORS CORP), 6. Juni 2003 (2003-06-06)

## Beschreibung

Die vorliegende Erfindung betrifft eine Vorrichtung für eine Komponente eines Fahrzeugs, beispielsweise eine Sonnenblende, zum Verlegen mindestens eines Kabels.

Durch die vielfältige Ausstattung von Fahrzeugen ist der Verkabelungsaufwand in Fahrzeugen sehr groß. Beispielsweise werden Fahrzeuge häufig mit Komfortkomponenten ausgestattet, mit denen der Aufenthalt sowohl für den Fahrer als auch für Mitfahrer so angenehm wie möglich gestaltet werden kann. Viele Ausstattungskomponenten müssen elektrisch angeschlossen werden, was in der Fertigung aufwendig ist, aufgrund der beengten Platzverhältnisse oft von Hand durchgeführt werden muss und daher teuer ist.

Aufgrund des geringen zur Verfügung stehenden Platzes in Fahrzeugen sollte dieser optimal ausgenutzt werden.

Die JP-A-2003164033 eine derartige Vorrichtung.

Aufgabe der vorliegenden Erfindung ist es daher, eine kostengünstige, einfach zu fertigende und einfach montierbare Vorrichtung zur Verkabelung von Komponenten für ein Fahrzeug, bereitzustellen, die platzsparend ist und mit der das Verlegen der Kabel einfach und weitgehend automatisiert möglich ist.

Gelöst wird diese Aufgabe mit einer Vorrichtung mit den Merkmalen des Anspruchs 1. Das Führungsmittel erleichtert das Verlegen des Kabels zum Kontaktiermittel, so dass das Kabel schnell, einfach und daher kostengünstig verlegt werden kann. Das Kabel wird durch das Übernahmemittel hindurch zum Führungsmittel geführt.

Vorzugsweise weist das Übernahmemittel im Wesentlichen eine Trichterform auf. Durch die Trichterform kann es einerseits sehr leicht in das Übernahmemittel eingeführt und andererseits sehr genau am Führungsmittel platziert werden.

In einer bevorzugten Ausführungsform der Erfindung umfasst die Vorrichtung das Kontaktiermittel, so dass der Einbau der Vorrichtung in die Komponente als Baugruppe möglich ist. Daher ist die Vorrichtung schnell und kostengünstig montierbar.

Vorzugsweise weist das Übernahmemittel eine Eintrittsöffnung und eine Austrittsöffnung auf, wobei das Kabel von der Eintrittsöffnung zur Austrittsöffnung verlegbar ist und wobei in Verlegerichtung des Kabels der Querschnitt der Austrittsöffnung ca. gleich groß oder unwesentlich größer ist als die Summe der Querschnitte aller durch das Übernahmemittel geführten Kabel. Die Kabel liegen daher an der Austrittsöffnung im wesentlichen aneinander an, wobei die Austrittsöffnung groß genug ist, damit alle Kabel leicht durch die Austrittsöffnung geführt werden können.

Bevorzugt ist in Verlegerichtung des Kabels der Querschnitt der Eintrittsöffnung zumindest doppelt so groß wie der Querschnitt der Austrittsöffnung, so dass das Einführen des Kabels an der Eintrittsöffnung des Übernahmemittels leicht möglich ist.

In einer bevorzugten Ausführungsform sind mehrere Kabel an der Austrittsöffnung nebeneinanderliegend vorgesehen, besonders bevorzugt im wesentlichen in einer Ebene, so dass sie einzeln in das Führungsmittel eintreten können und dort einzeln zum Kontaktiermittel geführt werden können.

Das Übernahmemittel ist bevorzugt aus Kunststoff. Der Fachmann erkennt, dass jedes Material geeignet ist, das leicht ist und das leicht formbar ist.

Das Führungsmittel weist in einer bevorzugten Ausführungsform mindestens eine im wesentlichen längliche Kabelführung mit quer zur Verlegerichtung des Kabels zumindest teilweise L-förmigem und/oder zumindest teilweise U-förmigem Oberflächenprofil auf, an dem das Kabel anliegt. Dadurch wird sichergestellt, dass das Kabel in oder an der Kabelführung entlang geführt wird, ohne wegzurutschen, und dass es insbesondere nicht an solche Stellen geführt wird, an denen es nicht mehr gut mit den Kontaktiermitteln kontaktierbar ist.

Bevorzugt weist das Führungsmittel für jeweils ein Kabel genau eine Kabelführung auf, wobei insbesondere mehrere Kabelführungen nebeneinander angeordnet sind, so dass jedes Kabel einzeln zum Kontaktiermittel geführt wird und die Kabel sich nicht miteinander verdrehen.

Vorzugsweise weist das Führungsmittel eine Rampe zum Auslenken mehrerer Kabel aus einer Eintrittsebene, in der die Kabel in das Führungsmittel eintreten, in eine Austrittsebene, in der die Kabel aus dem Führungsmittel austreten, auf. Die Kabel weisen bevorzugt eine Steifigkeit auf, so dass sie ihre Verlegerichtung zumindest im wesentlichen beibehalten, wenn sie aus dem Führungsmittel austreten. Daher werden die Kabel vorzugsweise so ausgelenkt, dass sie vorteilhaft am und/oder im Kontaktiermittel bzw. den Kontaktiermitteln positionierbar sind, beispielsweise oberhalb der Kontaktiermittel. Um die Kabel mit dem Kontaktiermittel zu kontaktieren, werden sie zumindest teilweise an der Seite des Führungsmittels, an der sie aus dem Führungsmittel austreten, in Richtung auf die Eintrittsebene der Kabel in das Führungsmittel zurückgebogen. Daher stützt sich bei einer Zugbelastung, die an wenigstens einem der Kabel in Gegenrichtung der Verlegerichtung wirkt, das Kabel an einer Kante bzw. in einem Abstützpunkt ab, der sich am Führungsmittel in der Austrittsebene des Kabels am äußeren Eckpunkt der Rampe befindet. Daher übernimmt das Führungsmittel die Funktion der Zugentlastung für die Kabel.

Bevorzugt liegen die mehreren Kabel an der Austrittsöffnung des Übernahmemittels in der Eintrittsebene des Führungsmittels vor, so dass die Kabel vom Übernahmemittel in das Führungsmittel gleiten können, ohne hängen zu bleiben.

Die Kabelführungen sind in Verlegerichtung der Kabel vorzugsweise zumindest teilweise so bogenförmig, dass benachbarte Kabel in der Eintrittsebene zueinander parallel sind und im wesentlichen aneinander anliegen, während sie in der Austrittsebene voneinander beabstandet sind. Damit wird der an dem bzw. an den Kontaktiermitteln benötigte Abstand zwischen den Kabeln hergestellt.

Das Kontaktiermittel ist vorzugsweise eine Druckanschlussklemme, insbesondere eine Schneidklemme. Durch die Verwendung einer Druckanschlussklemme ist der Anschluss des Kabels schnell und einfach möglich. Bei Verwendung einer Schneidklemme kann der Aufwand des Abisolierens vor dem Kontaktieren eingespart werden. Der Fachmann erkennt, dass alle Kontaktiermittel verwendet werden können, die die Lage des Kabels sichern und mit denen der Kontakt des Kabels zur Elektronik/Elektrik sicher hergestellt werden kann, beispielsweise auch Schraubklemmen. Der Fachmann erkennt ebenfalls, dass bevorzugt Kontaktiermittel verwendet werden, mit denen der Aufwand des Abisolierens des Kabels eingespart werden kann. Dies hat weiterhin den Vorteil, dass die (nicht abisolierten) Kabel besser verlegbar sind, insbesondere im Übernahmemittel und/oder im Führungsmittel.

In einer bevorzugten Ausführungsform ist die Vorrichtung einstückig gefertigt, so dass der Aufwand bei der Montage von mehreren Komponenten der Vorrichtung entfällt. Daher ist die Vorrichtung in dieser Ausführungsform besonders kostengünstig verwendbar.

Mit der erfindungsgemäßen Vorrichtung zum Verlegen mindestens eines Kabels ist das Verlegen von Kabeln in bzw. für Komponenten in Fahrzeugen, einfach, schnell und kostengünstig möglich. Die Vorrichtung kann kostengünstig und einfach gefertigt werden und ist leicht montierbar.

Ein weiterer Gegenstand der vorliegenden Erfindung ist eine Sonnenblende für ein Fahrzeug, die eine erfindungsgemäße Vorrichtung zum Verlegen mindestens eines Kabels aufweist. Dadurch ist der Anschluss von Kabeln in der Sonnenblende einfach, schnell und kostengünstig möglich.

Ein weiterer Gegenstand der vorliegenden Erfindung ist ein Verfahren zum Verlegen eines Kabels zum Anschluss von Komponenten von Fahrzeugen, mit einer erfindungsgemäßen Vorrichtung, wobei das Kabel mittels der Vorrichtung zum Kontaktiermittel verlegt und dann der Kontakt des Kabels mit dem Kontaktiermittel hergestellt wird. Hierdurch ist das Verlegen des Kabels einfach und schnell möglich.

Vorzugsweise erfolgt das Verlegen des Kabels zum Kontaktiermittel maschinell. Das Kabel wird dabei durch das Übernahmemittel zum Führungsmittel und am Führungsmittel entlang zum Kontaktiermittel geschoben und dort so platziert, dass es einfach kontaktiert werden kann. Dadurch kann Arbeitszeit eingespart werden, wodurch die Fertigungskosten reduziert werden.

Das Kontaktiermittel ist bevorzugt mindestens eine Druckanschlussklemme, insbesondere eine Schneidklemme, wobei das Kabel bis oberhalb der Druckanschlussklemme verlegt wird, wobei das Kabel mittels Kraft, die auf das Kabel wirkt, in die Druckanschlussklemme gedrückt wird und wobei das Kabel dabei kontaktiert wird. Dies ist leicht und schnell und insbesondere auch maschinell möglich.

Das erfindungsgemäße Verfahren ermöglicht eine einfache, schnelle und weitestgehend maschinell durchführbare Verlegung von Kabeln zum Anschluss von Komponenten von Fahrzeugen. Außerdem ist es kostengünstig durchführbar.

Im folgenden wird die Erfindung anhand der **Figuren 1 - 4** beschrieben. Die Beschreibungen sind lediglich beispielhaft und schränken den allgemeinen Erfindungsgedanken nicht ein.
- **Figur 1**: zeigt eine Ausführungsform der erfindungsgemäßen Vorrichtung.
- **Figur 2**: zeigt eine Ausführungsform eines erfindungsgemäßen Führungsmittels.
- **Figur 3**: zeigt eine Seitenansicht des Führungsmittels aus **Figur 2**.
- **Figur 4**: zeigt eine Sonnenblende mit einer erfindungsgemäßen Vorrichtung.

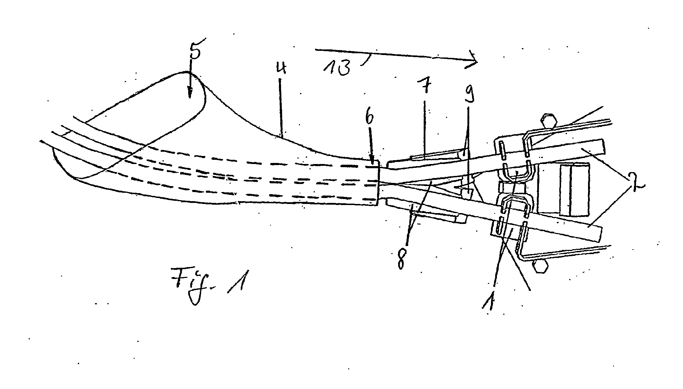

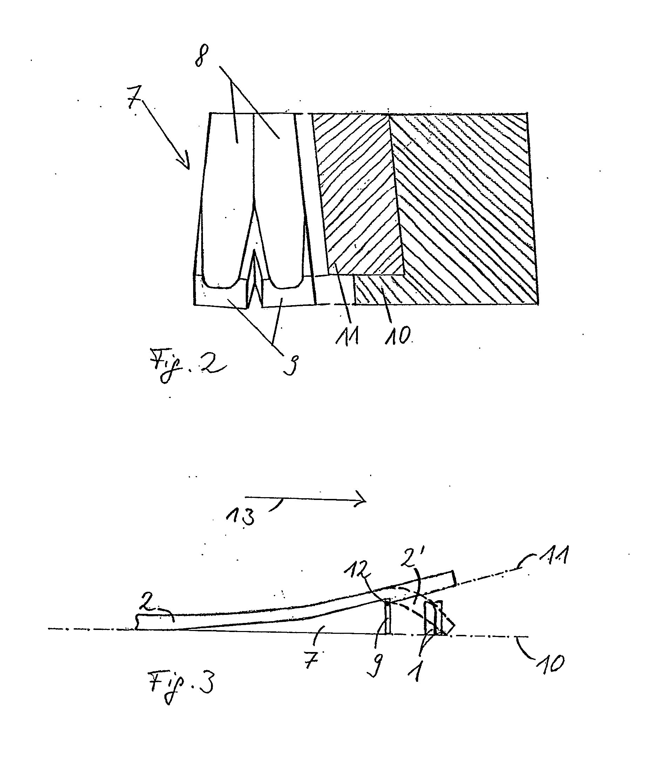

In **Figur 1** ist eine Ausführungsform der erfindungsgemäßen Vorrichtung zum Verlegen mindestens eines Kabels 2 dargestellt. Die Vorrichtung ist geeignet zum Verlegen von zwei oder auch mehr Kabeln 2. Sie weist ein Übernahmemittel 4, insbesondere aus Kunststoff, auf, das insbesondere im wesentlichen trichterförmig ist. Das Übernahmemittel 4 weist eine im Vergleich zur Austrittsöffnung 6 größere Eintrittsöffnung 5 auf, wobei die beiden Kabel 2 aus der Austrittsöffnung 6 nebeneinanderliegend und in einer Ebene angeordnet austreten. Die Ebene, in der die Kabel 2 die Austrittsöffnung 6 des Übernahmemittels 4 verlassen, ist gleich einer später bei Figur 2 und Figur 3 dargestellten Eintrittsebene, in der sie in ein Führungsmittel 7 eintreten. Das Führungsmittel 7 weist für beide dargestellten Kabel 2 jeweils eine Kabelführung 8 auf, an der die Kabel 2 beim Durchschieben entlang geführt werden, sowie eine Rampe 9, mit der die Kabel 2 aus ihrer Eintrittsebene, insbesondere nach oben, ausgelenkt werden, so dass sie über dem Kontaktiermittel 1 platziert werden. Als Kontaktiermittel 1 werden hier zwei Schneidklemmen 1 verwendet, so dass jeweils eines der Kabel 2 nach dem Durchschieben oberhalb jeweils einer der Schneidklemmen 1 platziert ist und in diese eingedrückt werden kann. Dabei werden die Kabel 2 kontaktiert. Die Begriffe Kontaktiermittel 1 und Schneidklemme 1 werden im folgenden synonym verwendet. Weiterhin ist auch eine Ausführungsform möglich, in der mehrere Kabel 2, beispielsweise zwei Kabel 2, durch das Führungsmittel 7 so auslenkt werden, dass sie übereinander angeordnet aus dem Führungsmittel 7 austreten und übereinander angeordnet oberhalb einer Schneidklemme 1 platziert sind. Die Kabel 2 können dann gemeinsam in die Schneidklemme 1 gedrückt werden.

**Figur 2** zeigt ein Führungsmittel 7 für Kabel 2, insbesondere für zwei Kabel 2, das zwei Kabelführungen 8 und eine Rampe 9 aufweist, so dass die Kabel 2 in der bereits (ohne Bezugszeichen) angesprochenen Eintrittsebene 10 in das Führungsmittel 7 eintreten und in einer Austrittsebene 11 aus dem Führungsmittel 7 austreten.

**Figur 3** zeigt zur Verdeutlichung der Rampe 9 eine Seitenansicht des Führungsmittels 7 aus **Figur 2**. Sichtbar ist der Verlauf eines Kabels 2 in dem Führungsmittel 7. Das Kabel 2 tritt in der Eintrittsebene 10 in das Führungsmittel 7 ein, wird durch die Rampe 9 ausgelenkt und tritt in der Austrittsebene 11 aus dem Führungsmittel 7 aus. Nachdem es aus dem Führungsmittel 7 ausgetreten ist, behält es zunächst zumindest im wesentlichen die Richtung der Austrittsebene 11 bei, in die es durch das Führungsmittel 7 ausgelenkt wurde. Beim Kontaktieren, hier beispielsweise durch Eindrücken des Kabels 2 in das Kontaktiermittel 1 bzw. in eine Schneidklemme 1, wird das Kabel 2 zumindest teilweise in Richtung auf die Eintrittsebene 10 des Kabels 2 in das Führungsmittel 7 zurückgebogen. Dadurch kann sich ein kontaktiertes Kabel 2' bei Zugbelastung in Gegenrichtung zur Verlegerichtung 13 in einem Abstützpunkt 12 abstützen, so dass die Rampe 9 des Führungsmittels 7 als Zugentlastung für das Kabel 2 wirkt. Der Abstützpunkt 12 ist insbesondere als Kante ausgebildet.

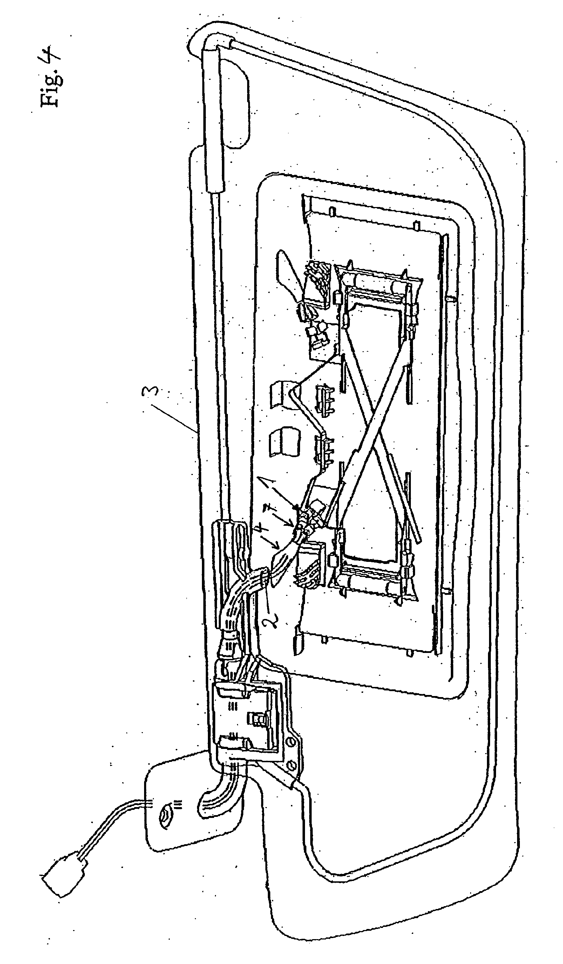

In **Figur 4** ist eine Sonnenblende 3 als Beispiel einer Fahrzeugkomponente dargestellt, die die erfindungsgemäße Vorrichtung zum Verlegen mindestens eines Kabels 2 umfasst. Die **Figur 4** verdeutlicht den Anschluss von Kabeln 2 der Sonnenblende 3. Die Kabel 2 werden durch das Übernahmemittel 4 geschoben, an der jeweiligen Kabelführung 8 des Führungsmittels 7 entlang über das Kontaktiermittel 1, hier Schneidklemmen, geführt und dann in die Schneidklemmen 1 eingedrückt, wobei sie kontaktiert werden.

Die erfindungsgemäße Vorrichtung sowie das erfindungsgemäße Verfahren ist in einer Vielzahl unterschiedlicher Komponente von Fahrzeugen, vorzugsweise elektrisch angeschlossener Komponenten, verwendbar bzw. anwendbar, beispielsweise in Sonnenblenden 3, im Cockpit oder in Fahrzeugtüren.

### Bezugszeichenliste:

- 1: Kontaktiermittel
- ₂: Kabel
- 2': Kabel nach dem Kontaktieren
- 3: Sonnenblende
- 4: Übernahmemittel
- 5: Eintrittsöffnung des Übernahmemittels
- 6: Austrittsöffnung des Übernahmemittels
- 7: Führungsmittel
- 8: Kabelführung
- 9: Rampe
- 10: Eintrittsebene
- 11: Austrittsebene
- 12: Abstützpunkt des Kabels nach dem Kontaktieren
- 13: Verlegerichtung

## Patentansprüche

1. Vorrichtung für eine Komponente (3) eines Fahrzeugs, zum Verlegen mindestens eines Kabels (2), welche ein Führungsmittel (7) umfasst, mittels dessen das Kabel (2) zu einem Kontaktiermittel (1) bewegbar ist, **dadurch gekennzeichnet, dass** die Vorrichtung ein Übernahmemittel (4) umfasst.

2. Vorrichtung nach Anspruch 1, **dadurch gekennzeichnet, dass** das Übernahmemittel im Wesentlichen eine Trichterform aufweist.

3. Vorrichtung nach einem der vorherigen Ansprüche, **dadurch gekennzeichnet, dass** die Vorrichtung das Kontaktiermittel (1) umfasst.

4. Vorrichtung nach einem der vorherigen Ansprüche, **dadurch gekennzeichnet, dass** das Übernahmemittel (4) eine Eintrittsöffnung (5) und eine Austrittsöffnung (6) aufweist, dass das Kabel (2) von der Eintrittsöffnung (5) zur Austrittsöffnung (6) verlegbar ist und dass in Verlegerichtung (13) des Kabels (2) der Querschnitt der Austrittsöffnung (6) ca. gleich groß oder unwesentlich größer ist als die Summe der Querschnitte aller durch das Übernahmemittel (4) geführten Kabel (2).

5. Vorrichtung nach Anspruch 4, **dadurch gekennzeichnet, dass** in Verlegerichtung (13) des Kabels (2) der Querschnitt der Eintrittsöffnung (5) zumindest doppelt so groß wie der Querschnitt der Austrittsöffnung (6) ist.

6. Vorrichtung nach einem der Ansprüche 4 - 5, **dadurch gekennzeichnet, dass** mehrere Kabel (2) an der Austrittsöffnung (6) nebeneinanderliegend vorgesehen sind, insbesondere im Wesentlichen in einer Ebene.

7. Vorrichtung nach einem der Ansprüche 4 - 6, **dadurch gekennzeichnet, dass** das Obernahmemittel (4) aus Kunststoff ist.

8. Vorrichtung nach einem der vorherigen Ansprüche, **dadurch gekennzeichnet, dass** das Führungsmittel (7) mindestens eine im wesentlichen längliche Kabelführung (8) mit quer zur Verlegerichtung (13) des Kabels (2) zumindest teilweise L-förmigem und/oder zumindest teilweise U-förmigem Oberflächenprofil aufweist, an dem das Kabel (2) anliegt.

9. Vorrichtung nach Anspruch 8, **dadurch gekennzeichnet, dass** das Führungsmittel (7) für jeweils ein Kabel (2) genau eine Kabelführung (8) aufweist, wobei insbesondere mehrere Kabelführungen (8) nebeneinander angeordnet sind.

10. Vorrichtung nach einem der vorherigen Ansprüche, **dadurch gekennzeichnet, dass** das Führungsmittel (7) eine Rampe (9) zum Auslenken mehrer Kabel (2) aus einer Eintrittsebene (10), in der die Kabel (2) in das Führungsmittel (7) eintreten, in eine Austrittsebene (11), in der die Kabel (2) aus dem Führungsmittel (7) austreten, aufweist.

11. Vorrichtung nach Anspruch 10, **dadurch gekennzeichnet, dass** die mehreren Kabel (2) an der Austrittsöffnung des Übernahmemittels (4) in der Eintrittsebene (10) des Führungsmittels (7) verlegen.

12. Vorrichtung nach einem der Ansprüche 10 -11, **dadurch gekennzeichnet, dass** die Kabelführungen (8) in Verlegerichtung (13) der Kabel (2) zumindest teilweise so bogenförmig sind, dass benachbarte Kabel (2) in der Eintrittsebene (10) zueinander parallel sind und im Wesentlichen aneinander anliegen, während sie in der Austrittsebene (11) voneinander beabstandet sind.

13. Vorrichtung nach einem der vorherigen Ansprüche, **dadurch gekennzeichnet, dass** das Kontaktmittel (1) eine Druckanschlussklemme, insbesondere eine Schneidklemme ist.

14. Vorrichtung nach einem der vorherigen Ansprüche, **dadurch gekennzeichnet, dass** sie einstückig gefertigt ist.

15. Sonnenblende für ein Fahrzeug, **dadurch gekennzeichnet, dass** die Sonnenblende eine Vorrichtung zum Verlegen mindestens eines Kabels (2) nach einem der vorherigen Ansprüche aufweist.

16. Verfahren zum Verlegen eines Kabels (2) zum Anschluss von Komponenten (3) von Fahrzeugen, mit einer Vorrichtung nach einem der Ansprüche 1 -14, **dadurch gekennzeichnet, dass** das Kabel (2) mittels der Vorrichtung zum Kontaktiermittel (1) verlegt und dann der Kontakt des Kabel (2) mit dem Kontaktiermittel (1) hergestellt wird.

17. Verfahren nach Anspruch 16, **dadurch gekennzeichnet, dass** das Verlegen des Kabels (2) zum Kontaktiermittel (1) maschinell erfolgt.

18. Verfahren einem der Ansprüche 16 -17, **dadurch gekennzeichnet, dass** das Kontaktiermittel (1) mindestens eine Druckanschlussklemme, insbesondere eine Schneidklemme ist, dass das Kabel (2) bis oberhalb der Druckanschlussklemme verlegt wird, dass das Kabel (2) mittels Kraft, die auf das Kabel (2) wirkt, in die Druckanschlussklemme gedrückt wird und dass das Kabel (2) dabei kontaktiert wird.

## Claims

1. Apparatus, in particular for a component (3) of a vehicle, for laying at least one cable (2), **characterized in that** the apparatus comprises a guide means (7), and **in that** the cable (2) can be moved to a contact-making means (1) by means of the guide means (7).

2. Apparatus according to Claim 1, **characterized in that** the apparatus comprises a transfer means (4) which is preferably substantially in the form of a funnel.

3. Apparatus according to either of the preceding claims, **characterized in that** the apparatus comprises the contact-making means (1).

4. Apparatus according to one of the preceding claims, **characterized in that** the transfer means (4) has an inlet opening (5) and an outlet opening (6), **in that** the cable (2) can be laid from the inlet opening (5) to the outlet opening (6), and **in that** the cross section of the outlet opening (6) in the laying direction (13) of the cable (2) is approximately the same size as or slightly larger than the sum of the cross sections of all of the cables (2) which are passed through the transfer means (4).

5. Apparatus according to Claim 4, **characterized in that** the cross section of the inlet opening (5) in the laying direction (13) of the cable (2) is at least twice the size of the cross section of the outlet opening (6).

6. Apparatus according to one of Claims 4-5, **characterized in that** a plurality of cables (2) are provided next to one another at the outlet opening (6), in particular substantially in one plane.

7. Apparatus according to one of Claims 4-6, **characterized in that** the transfer means (4) is made of plastic.

8. Apparatus according to one of the preceding claims, **characterized in that** the guide means (7) has at least one substantially elongate cable guide (8) with an at least partially L-shaped surface profile and/or an at least partially U-shaped surface profile transverse to the laying direction (13) of the cable (2), on which surface profile the cable (2) rests.

9. Apparatus according to Claim 8, **characterized in that** the guide means (7) has precisely one cable guide (8) for each cable (2), with a plurality of cable guides (8) being arranged next to one another in particular.

10. Apparatus according to one of the preceding claims, **characterized in that** the guide means (7) has a ramp (9) for deflecting a plurality of cables (2) from an inlet plane (10), in which the cables (2) enter the guide means (7), into an outlet plane (11), in which the cables (2) leave the guide means (7).

11. Apparatus according to Claim 10, **characterized in that** the plurality of cables (2) are present at the outlet opening of the transfer means (4) in the inlet plane (10) of the guide means (7).

12. Apparatus according to either of Claims 10-11, **characterized in that**, in the laying direction (13) of the cables (2), the cable guides (8) are at least partly bent such that adjacent cables (2) are parallel to one another and rest substantially against one another in the inlet plane (10), whereas they are spaced apart from one another in the outlet plane (11).

13. Apparatus according to one of the preceding claims, **characterized in that** the contact-making means (1) is a pressure-connection terminal, in particular an insulation-displacement terminal.

14. Apparatus according to one of the preceding claims, **characterized in that** it is produced integrally.

15. Sun visor, in particular for a vehicle, **characterized in that** the sun visor has an apparatus for laying at least one cable (2) according to one of the preceding claims.

16. Method for laying a cable (2), in particular for connecting components (3) of vehicles, having an apparatus according to one of Claims 1-14, **characterized in that** the cable (2) is laid to the contact-making means (1) by means of the apparatus and contact is then made between the cable (2) and the contact-making means (1).

17. Method according to Claim 16, **characterized in that** the cable (2) is laid to the contact-making means (1) by machine.

18. Method according to either of Claims 16-17, **characterized in that** the contact-making means (1) is at least one pressure-connection terminal, in particular an insulation-displacement terminal, **in that** the cable (2) is laid up to a point above the pressure-connection terminal, **in that** the cable (2) is pressed into the pressure-connection terminal by means of the force which acts on the cable (2), and **in that** contact is made with the cable (2) in the process.

## Revendications

1. Dispositif, notamment pour une composante (3) d'un véhicule, pour poser au moins un câble (2), **caractérisé en ce que** le dispositif comprend un moyen de guidage (7) et que le câble (2) peut être déplacé en direction d'un moyen de mise en contact (1) à l'aide du moyen de guidage (7).

2. Dispositif selon la revendication 1, **caractérisé en ce que** le dispositif comprend un moyen de prise en charge (4) qui prend de façon préférée pour l'essentiel une forme d'entonnoir.

3. Dispositif selon l'une quelconque des revendications précédentes, **caractérisé en ce que** le dispositif comprend le moyen de mise en contact (1).

4. Dispositif selon l'une quelconque des revendications précédentes, **caractérisé en ce que** le moyen de prise en charge (4) comporte une ouverture d'entrée (5) et une ouverture de sortie (6), que le câble (2) peut être posé de l'ouverture d'entrée (5) vers l'ouverture de sortie (6) et que dans la direction de pose (13) du câble (2), la section transversale de l'ouverture de sortie (6) est approximativement égale ou légèrement supérieure à la somme des sections transversales de tous les câbles (2) guidés à travers le moyen de prise en charge (4).

5. Dispositif selon la revendication 4, **caractérisé en ce que** dans la direction de pose (13) du câble (2), la section transversale de l'ouverture d'entrée (5) représente au moins le double de la section transversale de l'ouverture de sortie (6).

6. Dispositif selon l'une quelconque des revendications 4 à 5, **caractérisé en ce que** plusieurs câbles (2) sont prévus côte à côte au niveau de l'ouverture de sortie (6), notamment pour l'essentiel dans un plan.

7. Dispositif selon l'une quelconque des revendications 4 à 6, **caractérisé en ce que** le moyen de prise en charge (4) est en matière plastique.

8. Dispositif selon l'une quelconque des revendications précédentes, **caractérisé en ce que** le moyen de guidage (7) comporte au moins un guide-câble (8) pour l'essentiel allongé doté d'un profilé de surface prenant, transversalement à la direction de pose (13) du câble (2), au moins en partie une forme de L et/ou au moins en partie une forme de U, le câble (2) reposant contre ledit profilé.

9. Dispositif selon la revendication 8, **caractérisé en ce que** le moyen de guidage (7) comporte précisément un guide-câble (8) pour respectivement chaque câble (2), plusieurs guide-câble (8) étant notamment disposés côte à côte.

10. Dispositif selon l'une quelconque des revendications précédentes, **caractérisé en ce que** le moyen de guidage (7) comprend une rampe (9) servant à orienter plusieurs câbles (2) d'un plan d'entrée (10) dans lequel les câbles (2) pénètrent dans le moyen de guidage (7) dans un plan de sortie (11) dans lequel les câbles (2) ressortent du moyen de guidage (7).

11. Dispositif selon la revendication 10, **caractérisé en ce que** les multiples câbles (2) se trouvent dans le plan d'entrée (10) du moyen de guidage (7), au niveau de l'ouverture de sortie du moyen de prise en charge (4).

12. Dispositif selon l'une quelconque des revendications 10 à 11, **caractérisé en ce que** les guide-câble (8) prennent dans la direction de pose (13) des câbles (2) au moins en partie une forme arquée telle que les câbles (2) connexes reposent parallèlement les uns par rapport aux autres dans le plan d'entrée (10) et s'écartent pour l'essentiel les uns des autres dans le plan de sortie (11).

13. Dispositif selon l'une quelconque des revendications précédentes, **caractérisé en ce que** le moyen de mise en contact (1) comporte une borne de raccordement par pression, notamment un contact à déplacement d'isolant.

14. Dispositif selon l'une quelconque des revendications précédentes, **caractérisé en ce qu'**il est fabriqué d'un seul tenant.

15. Pare-soleil, notamment pour un véhicule, **caractérisé en ce que** le pare-soleil comporte un dispositif permettant de poser au moins un câble (2) selon l'une quelconque des revendications précédentes.

16. Procédé de pose d'un câble (2), notamment de raccordement de composantes (3) de véhicules, avec un dispositif selon l'une quelconque des revendications 1 à 14, **caractérisé en ce que** le câble (2) est posé en direction du moyen de mise en contact (1) à l'aide du dispositif puis que le contact du câble (2) est établi avec le moyen de mise en contact (1).

17. Procédé selon la revendication 16, **caractérisé en ce que** la pose du câble (2) est réalisée par voie de machine jusqu'au moyen de mise en contact (1).

18. Procédé selon l'une quelconque des revendications 16 à 17, **caractérisé en ce que** le moyen de mise en contact (1) est au moins une borne de raccordement par pression, notamment un contact à déplacement d'isolant et que le câble (2) est posé jusqu'au-dessus de la borne de raccordement par pression, que le câble (2) est comprimé par le biais d'une force qui agit sur le câble (2) dans la borne de raccordement par pression et que le câble (2) est ainsi mis en contact.
